# EUROPEAN PATENT APPLICATION

(11) **EP 4 510 534 A1**
(43) Date of publication of application: **19.02.2025**
(21) Application number: 24179329.8
(22) Date of filing: 31.05.2024
(51) Int. Cl.: H04L 65/1016, H04L 65/1063, H04L 65/80

(54) **SYSTEMS AND METHODS FOR POWER SAVING ACCORDING TO RAN AWARENESS**

(30) Priority: 15.08.2023 US 202363532805 P; 29.03.2024 US 202418622195
(71) Applicant: Meta Platforms Technologies, LLC, Menlo Park, CA 94025 (US)
(72) Inventor: Wong, Curt, Menlo Park (US); Abdelmalek, Yousef, Menlo Park (US); Ji, Zhu, Menlo Park (US); Yu, Liwen, Menlo Park (US)
(74) Representative: Murgitroyd & Company

(57) **Abstract**

Systems, methods, and devices for power saving according to radio access network (RAN) awareness may include an application server establishing, with a wireless communication node, a reference time between one or more first clocks of the application server and one or more second clocks of the wireless communication node. The application server may transmit one or more packets to the wireless communication node for providing to a user equipment (UE), the one or more packets including information usable by the wireless communication node for applying a delivery policy for delivering the one or more packets to the UE, according to the reference time.

## Description

### FIELD OF DISCLOSURE

The present disclosure is generally related to wireless communication between devices, including but not limited to, systems and methods for power saving according to radio access network (RAN) awareness.

### BACKGROUND

Augmented reality (AR), virtual reality (VR), and mixed reality (MR) are becoming more prevalent, which such technology being supported across a wider variety of platforms and device. Some AR/VR/MR devices may communicate with other devices within an environment via real-time communication (RTC) sessions or links.

### SUMMARY

In one aspect, this disclosure is directed to a method. The method includes establishing, by an application server with a wireless communication node (e.g., a node of the RAN, such as a base station), a reference time (e.g., a difference in time, for synchronizing NTP-S and CPDU-S for instance) between one or more first clocks (e.g., PDU set clock) of the application server and one or more second clocks (e.g., NTP clock) of the wireless communication node. The method further includes transmitting, by the application server, one or more packets (e.g., PDU set) to the wireless communication node for providing to a user equipment (UE), the one or more packets including information (e.g., PST-S and delivery time window in PDU set metadata) usable by the wireless communication node for applying a delivery policy (e.g., PDU set discard policy) for delivering the one or more packets to the UE, according to the reference time.

In some embodiments, the one or more packets include one or more first packets. The method may include transmitting, by the application server, one or more second packets to the wireless communication node, the one or more first packets transmitted via a first data pipe and the one or more second packets transmitted via a second data pipe (e.g., audio and video data pipes). In some embodiments, the one or more packets include one or more first packets, the one or more first packets including a common identifier (e.g., PSSI + correlation identifier) with one or more second packets, which link the one or more first packets to the one or more second packets. In some embodiments, the wireless communication node applies the delivery policy to each of the one or more first packets and the one or more second packets (e.g., applies same policy to linked data pipes), according to the common identifier. In some embodiments, the method includes setting, by the application server, a delivery status (e.g., Late-Discard All indication) for the one or more first packets and the one or more second packets, where the wireless communication node applies the delivery policy according to the delivery status. In some embodiments, the delivery status indicates whether the wireless communication node is to discard each of the one or more first packets and the one or more second packets, responsive to determining that at least one of the one or more first packets or the one or more second packets cannot be provided to the UE within a time window.

In some embodiments, the delivery policy comprises a discard policy corresponding to a delivery time window (e.g., PDU set discard timer) in which the one or more packets are to be delivered to the UE. In some embodiments, the information includes a first timestamp indicating a first time (e.g., PST-S), where the first timestamp is generated according to the one or more first clocks (e.g., PDU set clock). In some embodiments, the wireless communication node determines a time budget in which to deliver the one or more packets to the UE. The wireless communication node may determine the time budget according to 1) the first timestamp, 2) an arrival time of the one or more packets from the application server determined based on the one or more second clocks (e.g., NTP clock), 3) the reference time (e.g., NTP-S and/or CPDU-S), and 4) a delivery time window corresponding to the delivery policy. In some embodiments, the information includes a delivery time window (e.g., discard time window) which corresponds to the delivery policy. In some embodiments, the wireless communication node applies the delivery policy, to at least one of schedule delivery of the one or more packets, or discard the one or more packets.

In another aspect, this disclosure is directed to a wireless communication node including a wireless transceiver, and one or more processors configured to determine a reference time between one or more first clocks of an application server and one or more second clocks of the wireless communication node. The one or more processors are configured to receive, via the wireless transceiver from the application server, one or more packets for providing to a user equipment (UE), the one or more packets including information usable by the wireless communication node for applying a delivery policy. The one or more processors are further configured to apply the delivery policy to the one or more packets, for selectively delivering, via the wireless transceiver, the one or more packets to the UE, according to the reference time.

In some embodiments, the one or more packets include one or more first packets, where the one or more first packets include a common identifier with one or more second packets, which link the one or more packets to the one or more second packets. In some embodiments, the one or more processors apply the delivery policy to each of the one or more first packets and the one or more second packets, according to the common identifier. In some embodiments, the one or more processors are further configured to determine, according to the information of the one or more first packets and the one or more second packets, a delivery status for the one or more first packets and the one or more second packets. The one or more processors may apply the delivery policy according to the delivery status. In some embodiments, the delivery status indicates whether the wireless communication node is to discard each of the one or more first packets and the one or more second packets, responsive to determining that at least one of the one or more first packets or the one or more second packets cannot be provided to the UE within a time budget.

In some embodiments, the information includes a first timestamp indicating a first time, the first timestamp generated according to the one or more first clocks. In some embodiments, the one or more processors are configured to determine a time budget in which to deliver the one or more packets to the UE, the time budget determined according to 1) the first timestamp, 2) an arrival time of the one or more packets from the application server determined based on the one or more second clocks, 3) the reference time, and 4) a delivery time window corresponding to the delivery policy. In some embodiments, the one or more processors are configured to apply the delivery policy, to at least one of schedule delivery of the one or more packets, or discard the one or more packets.

In yet another aspect, this disclosure is directed to an application server including a wireless transceiver, and one or more processors configured to establish, with a wireless communication node, a reference time between one or more first clocks of the application server and one or more second clocks of the wireless communication node. The one or more processors are further configured to transmit, via the wireless transceiver, one or more packets to the wireless communication node for providing to a user equipment (UE), the one or more packets including information usable by the wireless communication node for applying a delivery policy for delivering the one or more packets to the UE, according to the reference time.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

The accompanying drawings are not intended to be drawn to scale. Like reference numbers and designations in the various drawings indicate like elements. For purposes of clarity, not every component can be labeled in every drawing.
FIG. 1 is a diagram of an example wireless communication system, according to an example implementation of the present disclosure.
FIG. 2 is a diagram of a console and a head wearable display for presenting augmented reality or virtual reality, according to an example implementation of the present disclosure.
FIG. 3 is a diagram of a head wearable display, according to an example implementation of the present disclosure.
FIG. 4 is a block diagram of a computing environment according to an example implementation of the present disclosure.
FIG. 5 is a block diagram of a system for power savings according to radio access network (RAN) awareness, according to an example implementation of the present disclosure.
FIG. 6 is a timing diagram for delivering packets, according to an example implementation of the present disclosure.
FIG. 7 is a signal flow diagram showing signaling by a core network (e.g., of the system of FIG. 5), according to an example implementation of the present disclosure
FIG. 8 is a flowchart showing an example method for power savings according to radio access network (RAN) awareness, according to an example implementation of the present disclosure.

### DETAILED DESCRIPTION

Before turning to the figures, which illustrate certain embodiments in detail, it should be understood that the present disclosure is not limited to the details or methodology set forth in the description or illustrated in the figures. It should also be understood that the terminology used herein is for the purpose of description only and should not be regarded as limiting.

Disclosed herein are related to systems and methods for power saving according to radio access network (RAN) awareness. In real-time communication (RTC) sessions, an endpoint / receiver may determine how to present media (e.g., in multi-modal flows, such as audio and video flows) to an end user. For example, if all media types arrive within a time window, a decoder of the receiver may synchronize their streams (e.g., lip and sound) to the end user. However, if one part of the media arrives late (e.g., audio is received but video packets are late), the receiver may only render the audio and can discard stale video packets or may discard both the audio and video packets. In instances where received packets are not used by the device (e.g., because they arrived too late for real-time communication), the device or UE may still consume unnecessary power in processing those packets due to, e.g., universal mobile telecommunications system (UMTS) air interface (or Uu interface) usage and any internal processing of those packets. In other words, the UE may waste unnecessary power or energy resource in processing packets that are otherwise discarded.

In a cellular communication system, power saving may be achieved at the UE using discontinuous reception (DRX), which allows the UE to enter a sleep mode periodically (e.g., outside of DRX windows or cycles. For example, the device may wake up between DRX cycles to receive packets (e.g., protocol data units, or PDUs) from the network via the radio access network (RAN). If there is no PDU being scheduled for transmission to the UE, then the UE can go back to sleep (e.g., enter a sleep mode), thereby allowing the UE to preserve more energy for later usage. Some solutions or standards may include a PDU set awareness for the RAN, for scheduling one QoS flow (e.g., video or audio). For example, a RAN can avoid unnecessary transmission of a PDU to a device if the delivery time for a PDU set falls outside of a PDU set delay budget (PSDB). Such solutions may define the capabilities for one QoS flow. However, there may not be a correlation defined between two PDU sets (e.g., for multimodality flows with multiple related media flows, such as audio and video, carried via two different QoS flows.

According to the systems and methods described herein, a RAN may be made aware that each PDU set delivery has an absolute deadline based on or according to a delivery time window. This use case can be due to synchronization of the multimodality flows at the receiver/decoder side. The RAN can be made aware of the PDU set delivery window. For example, the application function (AF), at the control plane level, can indicate to the RAN various parameters for signaling the PDU set delivery window. On the user plane, for each PDU set, the AF can include various information corresponding to those parameters for correlating the PDU set with the PDU set delivery window. The RAN can determine the time budget for delivering the PDU set based on the difference between the information corresponding to the PDU set and the PDU set delivery window. In instances where the RAN determines that the PDU set cannot be delivered within the time budget, the RAN can discard the PDU set.

In some embodiments, where a RAN is to coordinate scheduling multiple modality flows together, the RAN can be made aware that the modality flows are related. For example, a PDU set identifier can include a correlation identifier, which associates the multiple modality flows. If the RAN identifies multiple PDU sets that carry the same correlation identifier, the RAN can determine that the PDU sets are related (e.g., a part of the same modality flow). Additionally, the RAN can apply a policy for discarding PDU sets. The RAN can discard related PDU sets if one PDU set cannot meet the time budget. The RAN can receive the policy based on an indication included in metadata of the PDU sets (e.g., sent by the AF on the user plane or via control plane), set or defined locally, and so forth.

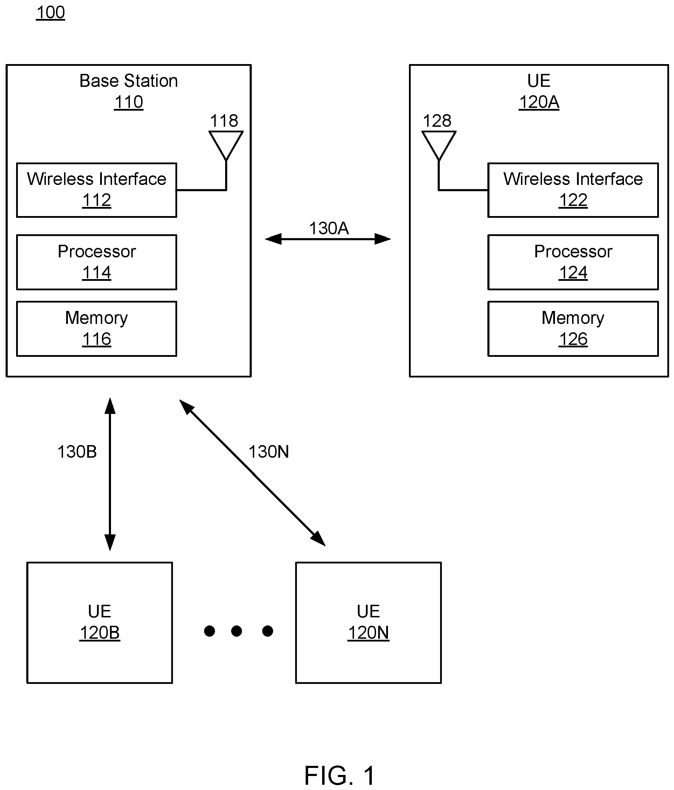

FIG. 1 illustrates an example wireless communication system 100. The wireless communication system 100 may include a base station 110 (also referred to as "a wireless communication node 110" or "a station 110") and one or more user equipment (UEs) 120 (also referred to as "wireless communication devices 120" or "terminal devices 120"). The base station 110 and the UEs 120 may communicate through wireless commination links 130A, 130B, 130C. The wireless communication link 130 may be a cellular communication link conforming to 3G, 4G, 5G or other cellular communication protocols or a Wi-Fi communication protocol. In one example, the wireless communication link 130 supports, employs or is based on an orthogonal frequency division multiple access (OFDMA). In one aspect, the UEs 120 are located within a geographical boundary with respect to the base station 110, and may communicate with or through the base station 110. In some embodiments, the wireless communication system 100 includes more, fewer, or different components than shown in FIG. 1. For example, the wireless communication system 100 may include one or more additional base stations 110 than shown in FIG. 1.

In some embodiments, the UE 120 may be a user device such as a mobile phone, a smart phone, a personal digital assistant (PDA), tablet, laptop computer, wearable computing device, etc. Each UE 120 may communicate with the base station 110 through a corresponding communication link 130. For example, the UE 120 may transmit data to a base station 110 through a wireless communication link 130, and receive data from the base station 110 through the wireless communication link 130. Example data may include audio data, image data, text, etc. Communication or transmission of data by the UE 120 to the base station 110 may be referred to as an uplink communication. Communication or reception of data by the UE 120 from the base station 110 may be referred to as a downlink communication. In some embodiments, the UE 120A includes a wireless interface 122, a processor 124, a memory device 126, and one or more antennas 128. These components may be embodied as hardware, software, firmware, or a combination thereof. In some embodiments, the UE 120A includes more, fewer, or different components than shown in FIG. 1. For example, the UE 120 may include an electronic display and/or an input device. For example, the UE 120 may include additional antennas 128 and wireless interfaces 122 than shown in FIG. 1.

The antenna 128 may be a component that receives a radio frequency (RF) signal and/or transmit a RF signal through a wireless medium. The RF signal may be at a frequency between 200 MHz to 100 GHz. The RF signal may have packets, symbols, or frames corresponding to data for communication. The antenna 128 may be a dipole antenna, a patch antenna, a ring antenna, or any suitable antenna for wireless communication. In one aspect, a single antenna 128 is utilized for both transmitting the RF signal and receiving the RF signal. In one aspect, different antennas 128 are utilized for transmitting the RF signal and receiving the RF signal. In one aspect, multiple antennas 128 are utilized to support multiple-in, multiple-out (MIMO) communication.

The wireless interface 122 includes or is embodied as a transceiver for transmitting and receiving RF signals through a wireless medium. The wireless interface 122 may communicate with a wireless interface 112 of the base station 110 through a wireless communication link 130A. In one configuration, the wireless interface 122 is coupled to one or more antennas 128. In one aspect, the wireless interface 122 may receive the RF signal at the RF frequency received through antenna 128, and downconvert the RF signal to a baseband frequency (e.g., 0~1 GHz). The wireless interface 122 may provide the downconverted signal to the processor 124. In one aspect, the wireless interface 122 may receive a baseband signal for transmission at a baseband frequency from the processor 124, and upconvert the baseband signal to generate a RF signal. The wireless interface 122 may transmit the RF signal through the antenna 128.

The processor 124 is a component that processes data. The processor 124 may be embodied as field programmable gate array (FPGA), application specific integrated circuit (ASIC), a logic circuit, etc. The processor 124 may obtain instructions from the memory device 126, and executes the instructions. In one aspect, the processor 124 may receive downconverted data at the baseband frequency from the wireless interface 122, and decode or process the downconverted data. For example, the processor 124 may generate audio data or image data according to the downconverted data, and present an audio indicated by the audio data and/or an image indicated by the image data to a user of the UE 120A. In one aspect, the processor 124 may generate or obtain data for transmission at the baseband frequency, and encode or process the data. For example, the processor 124 may encode or process image data or audio data at the baseband frequency, and provide the encoded or processed data to the wireless interface 122 for transmission.

The memory device 126 is a component that stores data. The memory device 126 may be embodied as random access memory (RAM), flash memory, read only memory (ROM), erasable programmable read-only memory (EPROM), electrically erasable programmable read-only memory (EEPROM), registers, a hard disk, a removable disk, a CD-ROM, or any device capable for storing data. The memory device 126 may be embodied as a non-transitory computer readable medium storing instructions executable by the processor 124 to perform various functions of the UE 120A disclosed herein. In some embodiments, the memory device 126 and the processor 124 are integrated as a single component.

In some embodiments, each of the UEs 120B... 120N includes similar components of the UE 120A to communicate with the base station 110. Thus, detailed description of duplicated portion thereof is omitted herein for the sake of brevity.

In some embodiments, the base station 110 may be an evolved node B (eNB), a serving eNB, a target eNB, a femto station, or a pico station. The base station 110 may be communicatively coupled to another base station 110 or other communication devices through a wireless communication link and/or a wired communication link. The base station 110 may receive data (or a RF signal) in an uplink communication from a UE 120. Additionally or alternatively, the base station 110 may provide data to another UE 120, another base station, or another communication device. Hence, the base station 110 allows communication among UEs 120 associated with the base station 110, or other UEs associated with different base stations. In some embodiments, the base station 110 includes a wireless interface 112, a processor 114, a memory device 116, and one or more antennas 118. These components may be embodied as hardware, software, firmware, or a combination thereof. In some embodiments, the base station 110 includes more, fewer, or different components than shown in FIG. 1. For example, the base station 110 may include an electronic display and/or an input device. For example, the base station 110 may include additional antennas 118 and wireless interfaces 112 than shown in FIG. 1.

The antenna 118 may be a component that receives a radio frequency (RF) signal and/or transmit a RF signal through a wireless medium. The antenna 118 may be a dipole antenna, a patch antenna, a ring antenna, or any suitable antenna for wireless communication. In one aspect, a single antenna 118 is utilized for both transmitting the RF signal and receiving the RF signal. In one aspect, different antennas 118 are utilized for transmitting the RF signal and receiving the RF signal. In one aspect, multiple antennas 118 are utilized to support multiple-in, multiple-out (MIMO) communication.

The wireless interface 112 includes or is embodied as a transceiver for transmitting and receiving RF signals through a wireless medium. The wireless interface 112 may communicate with a wireless interface 122 of the UE 120 through a wireless communication link 130. In one configuration, the wireless interface 112 is coupled to one or more antennas 118. In one aspect, the wireless interface 112 may receive the RF signal at the RF frequency received through antenna 118, and downconvert the RF signal to a baseband frequency (e.g., 0~1 GHz). The wireless interface 112 may provide the downconverted signal to the processor 124. In one aspect, the wireless interface 122 may receive a baseband signal for transmission at a baseband frequency from the processor 114, and upconvert the baseband signal to generate a RF signal. The wireless interface 112 may transmit the RF signal through the antenna 118.

The processor 114 is a component that processes data. The processor 114 may be embodied as FPGA, ASIC, a logic circuit, etc. The processor 114 may obtain instructions from the memory device 116, and executes the instructions. In one aspect, the processor 114 may receive downconverted data at the baseband frequency from the wireless interface 112, and decode or process the downconverted data. For example, the processor 114 may generate audio data or image data according to the downconverted data. In one aspect, the processor 114 may generate or obtain data for transmission at the baseband frequency, and encode or process the data. For example, the processor 114 may encode or process image data or audio data at the baseband frequency, and provide the encoded or processed data to the wireless interface 112 for transmission. In one aspect, the processor 114 may set, assign, schedule, or allocate communication resources for different UEs 120. For example, the processor 114 may set different modulation schemes, time slots, channels, frequency bands, etc. for UEs 120 to avoid interference. The processor 114 may generate data (or UL CGs) indicating configuration of communication resources, and provide the data (or UL CGs) to the wireless interface 112 for transmission to the UEs 120.

The memory device 116 is a component that stores data. The memory device 116 may be embodied as RAM, flash memory, ROM, EPROM, EEPROM, registers, a hard disk, a removable disk, a CD-ROM, or any device capable for storing data. The memory device 116 may be embodied as a non-transitory computer readable medium storing instructions executable by the processor 114 to perform various functions of the base station 110 disclosed herein. In some embodiments, the memory device 116 and the processor 114 are integrated as a single component.

In some embodiments, communication between the base station 110 and the UE 120 is based on one or more layers of Open Systems Interconnection (OSI) model. The OSI model may include layers including: a physical layer, a Medium Access Control (MAC) layer, a Radio Link Control (RLC) layer, a Packet Data Convergence Protocol (PDCP) layer, a Radio Resource Control (RRC) layer, a Non Access Stratum (NAS) layer or an Internet Protocol (IP) layer, and other layer.

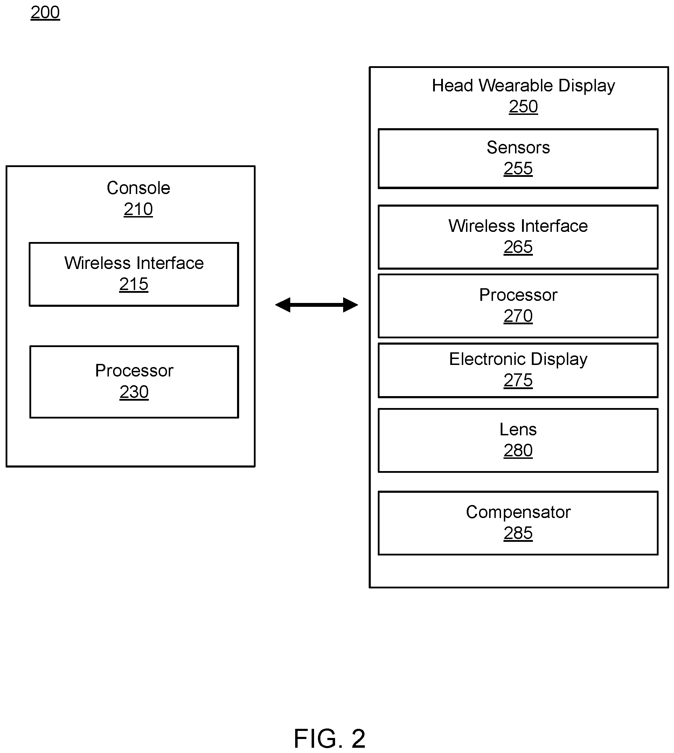

FIG. 2 is a block diagram of an example artificial reality system environment 200. In some embodiments, the artificial reality system environment 200 includes a HWD 250 worn by a user, and a console 210 providing content of artificial reality (e.g., augmented reality, virtual reality, mixed reality) to the HWD 250. Each of the HWD 250 and the console 210 may be a separate UE 120. The HWD 250 may be referred to as, include, or be part of a head mounted display (HMD), head mounted device (HMD), head wearable device (HWD), head worn display (HWD) or head worn device (HWD). The HWD 250 may detect its location and/or orientation of the HWD 250 as well as a shape, location, and/or an orientation of the body/hand/face of the user, and provide the detected location/or orientation of the HWD 250 and/or tracking information indicating the shape, location, and/or orientation of the body/hand/face to the console 210. The console 210 may generate image data indicating an image of the artificial reality according to the detected location and/or orientation of the HWD 250, the detected shape, location and/or orientation of the body/hand/face of the user, and/or a user input for the artificial reality, and transmit the image data to the HWD 250 for presentation. In some embodiments, the artificial reality system environment 200 includes more, fewer, or different components than shown in FIG. 2. In some embodiments, functionality of one or more components of the artificial reality system environment 200 can be distributed among the components in a different manner than is described here. For example, some of the functionality of the console 210 may be performed by the HWD 250. For example, some of the functionality of the HWD 250 may be performed by the console 210. In some embodiments, the console 210 is integrated as part of the HWD 250.

In some embodiments, the HWD 250 is an electronic component that can be worn by a user and can present or provide an artificial reality experience to the user. The HWD 250 may render one or more images, video, audio, or some combination thereof to provide the artificial reality experience to the user. In some embodiments, audio is presented via an external device (e.g., speakers and/or headphones) that receives audio information from the HWD 250, the console 210, or both, and presents audio based on the audio information. In some embodiments, the HWD 250 includes sensors 255, a wireless interface 265, a processor 270, an electronic display 275, a lens 280, and a compensator 285. These components may operate together to detect a location of the HWD 250 and a gaze direction of the user wearing the HWD 250, and render an image of a view within the artificial reality corresponding to the detected location and/or orientation of the HWD 250. In other embodiments, the HWD 250 includes more, fewer, or different components than shown in FIG. 2.

In some embodiments, the sensors 255 include electronic components or a combination of electronic components and software components that detect a location and an orientation of the HWD 250. Examples of the sensors 255 can include: one or more imaging sensors, one or more accelerometers, one or more gyroscopes, one or more magnetometers, or another suitable type of sensor that detects motion and/or location. For example, one or more accelerometers can measure translational movement (e.g., forward/back, up/down, left/right) and one or more gyroscopes can measure rotational movement (e.g., pitch, yaw, roll). In some embodiments, the sensors 255 detect the translational movement and the rotational movement, and determine an orientation and location of the HWD 250. In one aspect, the sensors 255 can detect the translational movement and the rotational movement with respect to a previous orientation and location of the HWD 250, and determine a new orientation and/or location of the HWD 250 by accumulating or integrating the detected translational movement and/or the rotational movement. Assuming for an example that the HWD 250 is oriented in a direction 25 degrees from a reference direction, in response to detecting that the HWD 250 has rotated 20 degrees, the sensors 255 may determine that the HWD 250 now faces or is oriented in a direction 45 degrees from the reference direction. Assuming for another example that the HWD 250 was located two feet away from a reference point in a first direction, in response to detecting that the HWD 250 has moved three feet in a second direction, the sensors 255 may determine that the HWD 250 is now located at a vector multiplication of the two feet in the first direction and the three feet in the second direction.

In some embodiments, the sensors 255 include eye trackers. The eye trackers may include electronic components or a combination of electronic components and software components that determine a gaze direction of the user of the HWD 250. In some embodiments, the HWD 250, the console 210 or a combination of them may incorporate the gaze direction of the user of the HWD 250 to generate image data for artificial reality. In some embodiments, the eye trackers include two eye trackers, where each eye tracker captures an image of a corresponding eye and determines a gaze direction of the eye. In one example, the eye tracker determines an angular rotation of the eye, a translation of the eye, a change in the torsion of the eye, and/or a change in shape of the eye, according to the captured image of the eye, and determines the relative gaze direction with respect to the HWD 250, according to the determined angular rotation, translation and the change in the torsion of the eye. In one approach, the eye tracker may shine or project a predetermined reference or structured pattern on a portion of the eye, and capture an image of the eye to analyze the pattern projected on the portion of the eye to determine a relative gaze direction of the eye with respect to the HWD 250. In some embodiments, the eye trackers incorporate the orientation of the HWD 250 and the relative gaze direction with respect to the HWD 250 to determine a gate direction of the user. Assuming for an example that the HWD 250 is oriented at a direction 30 degrees from a reference direction, and the relative gaze direction of the HWD 250 is -10 degrees (or 350 degrees) with respect to the HWD 250, the eye trackers may determine that the gaze direction of the user is 20 degrees from the reference direction. In some embodiments, a user of the HWD 250 can configure the HWD 250 (e.g., via user settings) to enable or disable the eye trackers. In some embodiments, a user of the HWD 250 is prompted to enable or disable the eye trackers.

In some embodiments, the wireless interface 265 includes an electronic component or a combination of an electronic component and a software component that communicates with the console 210. The wireless interface 265 may be or correspond to the wireless interface 122. The wireless interface 265 may communicate with a wireless interface 215 of the console 210 through a wireless communication link through the base station 110. Through the communication link, the wireless interface 265 may transmit to the console 210 data indicating the determined location and/or orientation of the HWD 250, and/or the determined gaze direction of the user. Moreover, through the communication link, the wireless interface 265 may receive from the console 210 image data indicating or corresponding to an image to be rendered and additional data associated with the image.

In some embodiments, the processor 270 includes an electronic component or a combination of an electronic component and a software component that generates one or more images for display, for example, according to a change in view of the space of the artificial reality. In some embodiments, the processor 270 is implemented as a part of the processor 124 or is communicatively coupled to the processor 124. In some embodiments, the processor 270 is implemented as a processor (or a graphical processing unit (GPU)) that executes instructions to perform various functions described herein. The processor 270 may receive, through the wireless interface 265, image data describing an image of artificial reality to be rendered and additional data associated with the image, and render the image to display through the electronic display 275. In some embodiments, the image data from the console 210 may be encoded, and the processor 270 may decode the image data to render the image. In some embodiments, the processor 270 receives, from the console 210 in additional data, object information indicating virtual objects in the artificial reality space and depth information indicating depth (or distances from the HWD 250) of the virtual objects. In one aspect, according to the image of the artificial reality, object information, depth information from the console 210, and/or updated sensor measurements from the sensors 255, the processor 270 may perform shading, reprojection, and/or blending to update the image of the artificial reality to correspond to the updated location and/or orientation of the HWD 250. Assuming that a user rotated his head after the initial sensor measurements, rather than recreating the entire image responsive to the updated sensor measurements, the processor 270 may generate a small portion (e.g., 10 %) of an image corresponding to an updated view within the artificial reality according to the updated sensor measurements, and append the portion to the image in the image data from the console 210 through reprojection. The processor 270 may perform shading and/or blending on the appended edges. Hence, without recreating the image of the artificial reality according to the updated sensor measurements, the processor 270 can generate the image of the artificial reality.

In some embodiments, the electronic display 275 is an electronic component that displays an image. The electronic display 275 may, for example, be a liquid crystal display or an organic light emitting diode display. The electronic display 275 may be a transparent display that allows the user to see through. In some embodiments, when the HWD 250 is worn by a user, the electronic display 275 is located proximate (e.g., less than 3 inches) to the user's eyes. In one aspect, the electronic display 275 emits or projects light towards the user's eyes according to image generated by the processor 270.

In some embodiments, the lens 280 is a mechanical component that alters received light from the electronic display 275. The lens 280 may magnify the light from the electronic display 275, and correct for optical error associated with the light. The lens 280 may be a Fresnel lens, a convex lens, a concave lens, a filter, or any suitable optical component that alters the light from the electronic display 275. Through the lens 280, light from the electronic display 275 can reach the pupils, such that the user can see the image displayed by the electronic display 275, despite the close proximity of the electronic display 275 to the eyes.

In some embodiments, the compensator 285 includes an electronic component or a combination of an electronic component and a software component that performs compensation to compensate for any distortions or aberrations. In one aspect, the lens 280 introduces optical aberrations such as a chromatic aberration, a pin-cushion distortion, barrel distortion, etc. The compensator 285 may determine a compensation (e.g., predistortion) to apply to the image to be rendered from the processor 270 to compensate for the distortions caused by the lens 280, and apply the determined compensation to the image from the processor 270. The compensator 285 may provide the predistorted image to the electronic display 275.

In some embodiments, the console 210 is an electronic component or a combination of an electronic component and a software component that provides content to be rendered to the HWD 250. In one aspect, the console 210 includes a wireless interface 215 and a processor 230. These components may operate together to determine a view (e.g., a FOV of the user) of the artificial reality corresponding to the location of the HWD 250 and the gaze direction of the user of the HWD 250, and can generate image data indicating an image of the artificial reality corresponding to the determined view. In addition, these components may operate together to generate additional data associated with the image. Additional data may be information associated with presenting or rendering the artificial reality other than the image of the artificial reality. Examples of additional data include, hand model data, mapping information for translating a location and an orientation of the HWD 250 in a physical space into a virtual space (or simultaneous localization and mapping (SLAM) data), eye tracking data, motion vector information, depth information, edge information, object information, etc. The console 210 may provide the image data and the additional data to the HWD 250 for presentation of the artificial reality. In other embodiments, the console 210 includes more, fewer, or different components than shown in FIG. 2. In some embodiments, the console 210 is integrated as part of the HWD 250.

In some embodiments, the wireless interface 215 is an electronic component or a combination of an electronic component and a software component that communicates with the HWD 250. The wireless interface 215 may be or correspond to the wireless interface 122. The wireless interface 215 may be a counterpart component to the wireless interface 265 to communicate through a communication link (e.g., wireless communication link). Through the communication link, the wireless interface 215 may receive from the HWD 250 data indicating the determined location and/or orientation of the HWD 250, and/or the determined gaze direction of the user. Moreover, through the communication link, the wireless interface 215 may transmit to the HWD 250 image data describing an image to be rendered and additional data associated with the image of the artificial reality.

The processor 230 can include or correspond to a component that generates content to be rendered according to the location and/or orientation of the HWD 250. In some embodiments, the processor 230 is implemented as a part of the processor 124 or is communicatively coupled to the processor 124. In some embodiments, the processor 230 may incorporate the gaze direction of the user of the HWD 250. In one aspect, the processor 230 determines a view of the artificial reality according to the location and/or orientation of the HWD 250. For example, the processor 230 maps the location of the HWD 250 in a physical space to a location within an artificial reality space, and determines a view of the artificial reality space along a direction corresponding to the mapped orientation from the mapped location in the artificial reality space. The processor 230 may generate image data describing an image of the determined view of the artificial reality space, and transmit the image data to the HWD 250 through the wireless interface 215. In some embodiments, the processor 230 may generate additional data including motion vector information, depth information, edge information, object information, hand model data, etc., associated with the image, and transmit the additional data together with the image data to the HWD 250 through the wireless interface 215. The processor 230 may encode the image data describing the image, and can transmit the encoded data to the HWD 250. In some embodiments, the processor 230 generates and provides the image data to the HWD 250 periodically (e.g., every 11 ms).

In one aspect, the process of detecting the location of the HWD 250 and the gaze direction of the user wearing the HWD 250, and rendering the image to the user should be performed within a frame time (e.g., 11 ms or 16 ms). A latency between a movement of the user wearing the HWD 250 and an image displayed corresponding to the user movement can cause judder, which may result in motion sickness and can degrade the user experience. In one aspect, the HWD 250 and the console 210 can prioritize communication for AR/VR, such that the latency between the movement of the user wearing the HWD 250 and the image displayed corresponding to the user movement can be presented within the frame time (e.g., 11 ms or 16 ms) to provide a seamless experience.

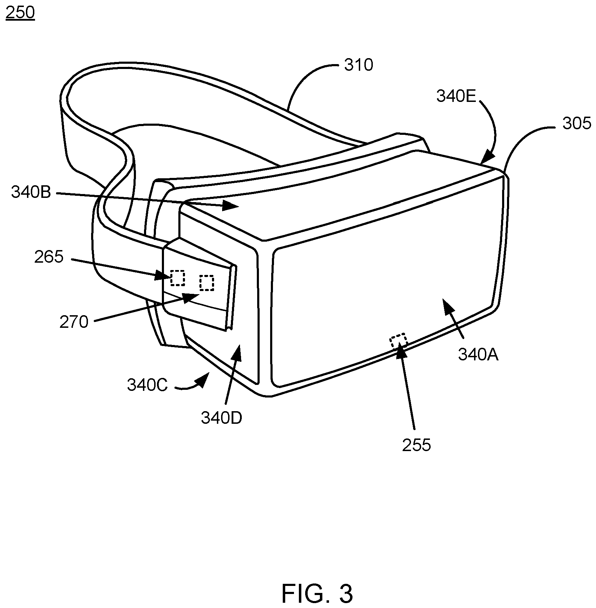

FIG. 3 is a diagram of a HWD 250, in accordance with an example embodiment. In some embodiments, the HWD 250 includes a front rigid body 305 and a band 310. The front rigid body 305 includes the electronic display 275 (not shown in FIG. 3), the lens 280 (not shown in FIG. 3), the sensors 255, the wireless interface 265, and the processor 270. In the embodiment shown by FIG. 3, the wireless interface 265, the processor 270, and the sensors 255 are located within the front rigid body 205, and may not be visible externally. In other embodiments, the HWD 250 has a different configuration than shown in FIG. 3. For example, the wireless interface 265, the processor 270, and/or the sensors 255 may be in different locations than shown in FIG. 3.

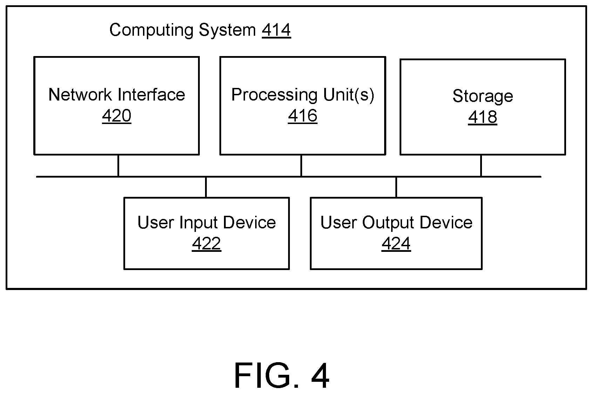

Various operations described herein can be implemented on computer systems. FIG. 4 shows a block diagram of a representative computing system 414 usable to implement the present disclosure. In some embodiments, the source devices 110, the sink device 120, the console 210, the HWD 250 are implemented by the computing system 414. Computing system 414 can be implemented, for example, as a consumer device such as a smartphone, other mobile phone, tablet computer, wearable computing device (e.g., smart watch, eyeglasses, head wearable display), desktop computer, laptop computer, or implemented with distributed computing devices. The computing system 414 can be implemented to provide VR, AR, MR experience. In some embodiments, the computing system 414 can include conventional computer components such as processors 416, storage device 418, network interface 420, user input device 422, and user output device 424.

Network interface 420 can provide a connection to a wide area network (e.g., the Internet) to which WAN interface of a remote server system is also connected. Network interface 420 can include a wired interface (e.g., Ethernet) and/or a wireless interface implementing various RF data communication standards such as Wi-Fi, Bluetooth, or cellular data network standards (e.g., 3G, 4G, 5G, 60 GHz, LTE, etc.).

The network interface 420 may include a transceiver to allow the computing system 414 to transmit and receive data from a remote device using a transmitter and receiver. The transceiver may be configured to support transmission/reception supporting industry standards that enables bi-directional communication. An antenna may be attached to transceiver housing and electrically coupled to the transceiver. Additionally or alternatively, a multi-antenna array may be electrically coupled to the transceiver such that a plurality of beams pointing in distinct directions may facilitate in transmitting and/or receiving data.

A transmitter may be configured to wirelessly transmit frames, slots, or symbols generated by the processor unit 416. Similarly, a receiver may be configured to receive frames, slots or symbols and the processor unit 416 may be configured to process the frames. For example, the processor unit 416 can be configured to determine a type of frame and to process the frame and/or fields of the frame accordingly.

User input device 422 can include any device (or devices) via which a user can provide signals to computing system 414; computing system 414 can interpret the signals as indicative of particular user requests or information. User input device 422 can include any or all of a keyboard, touch pad, touch screen, mouse or other pointing device, scroll wheel, click wheel, dial, button, switch, keypad, microphone, sensors (e.g., a motion sensor, an eye tracking sensor, etc.), and so on.

User output device 424 can include any device via which computing system 414 can provide information to a user. For example, user output device 424 can include a display to display images generated by or delivered to computing system 414. The display can incorporate various image generation technologies, e.g., a liquid crystal display (LCD), light-emitting diode (LED) including organic light-emitting diodes (OLED), projection system, cathode ray tube (CRT), or the like, together with supporting electronics (e.g., digital-to-analog or analog-to-digital converters, signal processors, or the like). A device such as a touchscreen that function as both input and output device can be used. Output devices 424 can be provided in addition to or instead of a display. Examples include indicator lights, speakers, tactile "display" devices, printers, and so on.

Some implementations include electronic components, such as microprocessors, storage and memory that store computer program instructions in a computer readable storage medium (e.g., non-transitory computer readable medium). Many of the features described in this specification can be implemented as processes that are specified as a set of program instructions encoded on a computer readable storage medium. When these program instructions are executed by one or more processors, they cause the processors to perform various operation indicated in the program instructions. Examples of program instructions or computer code include machine code, such as is produced by a compiler, and files including higher-level code that are executed by a computer, an electronic component, or a microprocessor using an interpreter. Through suitable programming, processor 416 can provide various functionality for computing system 414, including any of the functionality described herein as being performed by a server or client, or other functionality associated with message management services.

It will be appreciated that computing system 414 is illustrative and that variations and modifications are possible. Computer systems used in connection with the present disclosure can have other capabilities not specifically described here. Further, while computing system 414 is described with reference to particular blocks, it is to be understood that these blocks are defined for convenience of description and are not intended to imply a particular physical arrangement of component parts. For instance, different blocks can be located in the same facility, in the same server rack, or on the same motherboard. Further, the blocks need not correspond to physically distinct components. Blocks can be configured to perform various operations, e.g., by programming a processor or providing appropriate control circuitry, and various blocks might or might not be reconfigurable depending on how the initial configuration is obtained. Implementations of the present disclosure can be realized in a variety of apparatus including electronic devices implemented using any combination of circuitry and software.

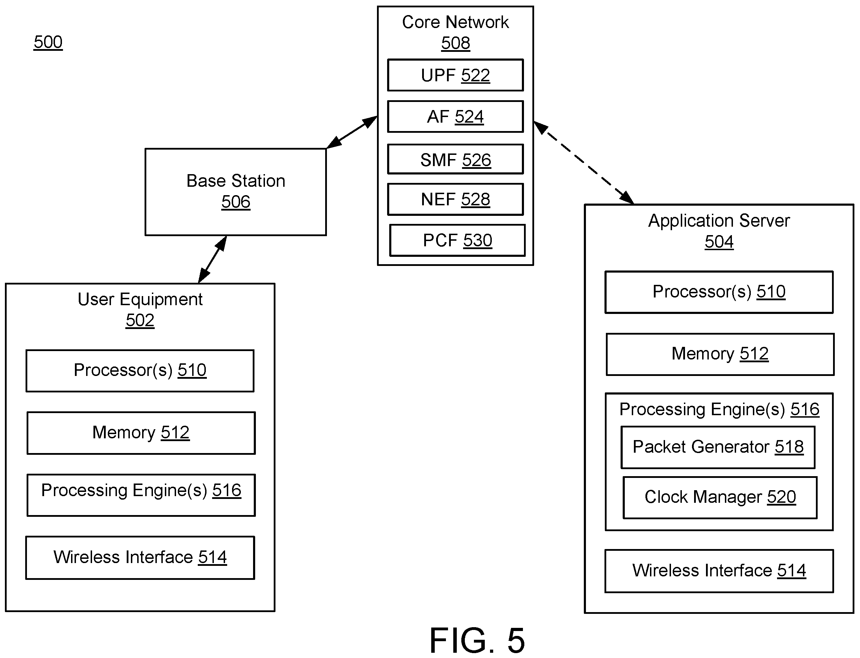

Referring now to FIG. 5, depicted is a block diagram of a system 500 for enabling power savings according to radio access network (RAN) awareness, according to an example implementation of the present disclosure. The system 500 may include user equipment (UE) 502 communicably coupled to an application server 504 via respective base station(s) 506 (also referred to as "wireless communication node(s)") through a core network 508. The UE 502 may be configured to establish a connection with the application server 504, to send and/or receive data / information / traffic between the UE 502 and application server 504. In various embodiments, the traffic may include multi-modal traffic, such as audio traffic, video traffic, control traffic, etc., which may be a part of common network traffic. For example, the traffic may include both audio and video data of a common media (e.g., including both audio and video).

As described in greater detail below, the application server 504 may be configured to establish a reference time between the application server 504 and a base station 506, where the reference time is (e.g., a difference value or time separation/offset) between one or more clocks of the application server 504 and one or more second clocks of the base station 506. The application server 504 may be configured to transmit one or more packets to the base station 506 for providing to the UE 502. The one or more packets may include information usable by the wireless communication node for applying a delivery policy for delivering the one or more packets to the UE 502, according to the reference time.

The UE 502 and application server 504 (as well as other components or elements of FIG. 5) may include one or more processors 510 and memory 512. The processor(s) 510 may be similar to the processors 114, 124 of FIG. 1, the processor(s) 230, 270 of FIG. 2 and FIG. 3, and/or processing units 416 of FIG. 4. The memory 512 may be similar to the memory 116, 126 of FIG. 1 and/or storage 418 of FIG. 4. The UE 502 and application server 504 (as well as the other components / elements of FIG. 5) may include a wireless interface 514, which may be similar to the wireless interfaces 112, 122, 215, 265 of FIG. 1 - FIG 3 and/or the network interface 420 of FIG. 4.

The UE 502 and application server 504 (as well as other components or elements of FIG. 5) may include one or more processing engines 516. The processing engine(s) 516 may be or include any device, component, element, or hardware designed or configured to perform various functions of the device. While shown as embodied on the respective devices 502, 504, in various embodiments, the processing engine(s) 516 may be or include hardware of the wireless interface 514. The processing engine(s) 516 may include a packet generator 518 and a clock manager 520. While these two processing engine(s) 516 are shown and described, in various embodiments, additional processing engines 516 may be implemented at the device 502, 504 and/or in the wireless interface 510. Further, and in various embodiments, one or more processing engines 516 may be combined with another processing engine 516. Additionally or alternatively, one processing engine 516 may be divided into multiple processing engines 516.

The application server 504 and UE 502 may be configured to generate, create, or otherwise establish a communication session. For example, the UE 502 may be configured to launch an application hosted on the application server 504, which may involve exchanging of packets / protocol data units (PDUs) between the UE 502 and application server 504. The communication session may be or include a plurality of connections or channels between the UE 502 and server 504 through the core network 508 via one or more base stations 506. For example, the UE 502 may establish a connection with a base station 506 in wireless communication range of the UE 502, for purposes of communicating with the application server 504. In various embodiments, while not shown, the application server 504 may be configured to communicate with the core network 508 via a base station 506 which communicably couples the application server 504 to the core network 508.

The core network 508 may include or may be configured to provide various functions. In various embodiments, the core network 508 may include various processors and compute devices, memory, wireless interfaces, and so forth, which together provide the various functions described herein. The core network 508 may be configured to provide a user plane function (UPF) 522, an application function (AF) 524, a session management function (SMF) 526, and a network exposure function (NEF) 528, and policy control function (PCF) 530. While these functions are shown and described in greater detail below, the core network 508 may include, maintain, or otherwise provide various additional functions, such as an access and mobility management function (AMF), authentication server function (AUSF), unified data management (UDM), network slice selection function (NSSF), or any other function of the core network 508.

The core network 508 may include or provide the UPF 522. The UPF 522 may be or include a function of the core network 508 which is configured to manage user data traffic, including routing and forwarding of such traffic, to the intended destination. The core network 508 may include or provide the AF 524. The AF 524 may be or include a function of the core network 508 which supports application services, to meet application-specific requirements for quality of service (QoS) and traffic flow support. The core network 508 may include or provide the SMF 526. The SMF 526 may be or include a function of the core network 508 which manages network sessions, including establishing, maintaining, and/or terminating network sessions. The SMF 526 may be configured to assist in selecting and connecting to an appropriate UPF 522. The core network 508 may include or provide the NEF 528. The NEF 528 may be or include a function of the core network 508 which functions as a secure gateway between the core network 508 and external applications or services. For example, the NEF 528 may be configured to expose network capabilities to various third-party applications or servers, while executing or providing various policies and security measures with respect to user data and/or network operations. The core network 508 may include or provide the PCF 530. The PCF 530 may be or include a function of the core network 508 which executes various policy control decisions for managing traffic flow, based on predefined policies, subscriber data, and/or various real-time conditions.

As part of the communication session between the UE 502 and application server 504, the packet generator 518 may be configured to generate, establish, create, produce, or otherwise provide various packets (or protocol data units (PDUs)) for transmission to the UE 502. In various instances and use cases, such packets may be time sensitive. The packets may be time sensitive by being packets related to a real-time communication session, such as packets including or containing audio or video data of the real-time communication session. Packets including audio and/or video data may be time sensitive in that, if such packets are not provided to the UE 502 in a timely fashion, such packets may contribute to increased latency / lag, and thereby reduce overall user experience. For example, in a real-time communication session which may involve multi-modal flows (e.g., for audio and video streams), where one flow arrives later than another flow, rendering both flows may decrease user experience by not having synchronized streams (thereby producing lag). Further, if both streams are provided to the UE 502, even where one stream is lagging behind the other stream, the UE 502 may discard some of the packets (e.g., because they arrived too late for real-time communication). Thus, the UE 502 may consume unnecessary power to handle those discarded packets by using the Uu interface (radio) and internal processing of those packets (e.g., only to later discard those packets).

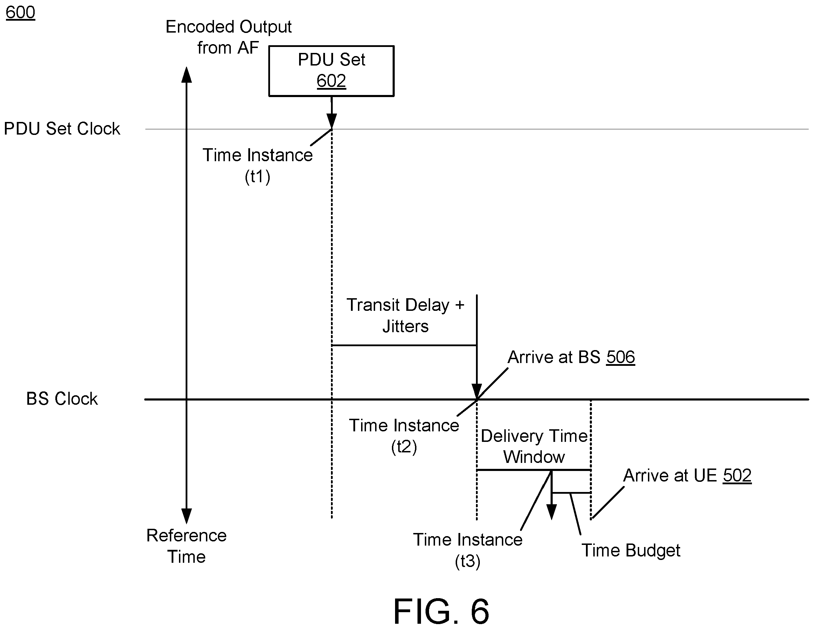

Referring now to FIG. 5 and FIG. 6, FIG. 6 shows a timing diagram 600 for delivering packets (e.g., a set of PDUs_, according to an example implementation of the present disclosure. The clock manager 520 may be configured to generate, negotiate, or otherwise establish a reference time between one or more clocks of the application server 504 and one or more clocks of the base station 506 (e.g., the base station 506 which is to deliver the packets generated by the application server 504 to the UE 502). The clock manager 520 may be configured to establish the reference time, as part of ensuring timely delivery of a PDU set 602 from the application server 504 to the UE 502 (e.g., to thereby decrease latency or lag, thus improve user experience). In some embodiments, the clock manager 520 may be configured to establish the reference time between one or more clocks of the application server 504 used to generate the PDU set 602 (and/or used to deliver the PDU set 602, shown in FIG. 6 as a PDU set clock) and one or more clocks of the base station 506 (shown in FIG. 6 as a BS clock).

In some embodiments, the clock manager 520 may be configured to transmit, communicate, or otherwise provide the PDU set 602 to the AF 524. The PDU set 602 may include an identifier corresponding to the communication session between the application server 504 and UE 502. For example, the packet generator 518 (e.g., when generating the PDU set 602) may be configured to generate or otherwise incorporate a PDU set source identifier into the PDU set 602. The PDU set identifier may be used (e.g., by the base station 506) to correlate or determine a correspondence between PDU sets 602 received via the AF 524 and PDU sets 602 received from the user plane (e.g., where separate PDU sets 602 are sent via separate data pipes or streams, such as one data pipe or stream for PDU sets 602 relating to or carrying audio data and one data pipe or stream for PDU sets 602 relating to or carrying video data). For example, the PDU set identifier may include a correlation identifier and a local PDU set identifier. The correlation identifier may be used for each of the flows / data pipes / streams for a respective communication session. For example, a real-time communication session may involve a multi-modal flow including separate PDU sets 602 containing different types of modalities (e.g., a first set of PDUs 602 for audio data, a second set of PDUs for video data, etc.). Each PDU set 602 may include a respective local PDU set identifier. However, because each of the PDU sets 602 in this example relate to a common real-time communication session, each of the PDU sets 602 may include the same correlation identifier.

The clock manager 520 may be configured to generate, include, or otherwise incorporate one or more timestamps into the PDU set 602, where the one or more timestamps are used for generating / establishing the reference time. In some embodiments, the clock manager 520 may be configured to incorporate a plurality of timestamps into the PDU set 602. For example, the clock manager 520 may be configured to incorporate a wallclock timestamp which is based on a network time protocol (NTP-S). The wallclock timestamp may be the reference time, which is set / determined / defined according to the NTP. The clock manager 520 may also be configured to generate, communicate, or otherwise provide a PDU timestamp (corresponding PDU timestamp, or CPDU-S) to the AF 524. The PDU timestamp may be correlated to or correspond to the value of the NTP-S. The PDU timestamp may represent or indicate a difference (e.g., correlated to) between the NTP-S and the clock used at the application server 504 and/or AF 524, for encoding the PDU set 602. In some embodiments, the application server 504 may be configured to encode the PDU sets 602 at a certain time (as indicated by a timestamp), and the AF 524 may be configured to set the PDU timestamp according to the timestamp indicating the time in which the PDU set 602 is encoded, and the NTP-S timestamp. As such, the PDU timestamp may represent the difference between the NTP-S and the PDU clock signal. The clock manager 520 may be configured to generate a PDU set timestamp (PST-S). The PDU set timestamp may be or include the time instance in which the PDU set 602 is encoded (e.g., at the AF 524 and/or application server 504). In the example shown in FIG. 6, the PDU set timestamp may represent or indicate a first time instance (t1), which may be based on the PDU set clock of the AF 524. In various instances, the AF 524 may be configured to refresh the PDU set timestamp clock and the NTP-S clock periodically, to account for drift at the encoder.

The core network 508 and base station 506 may be configured to use the three timestamps (CPDU-S, NTP-S, and PST-S) to establish the reference time. For example, the CPDU-S and NTP-S may represent a timing difference or offset between the start time of the clock used at the AF 524 / application server 504 for encoding PDU sets 602, and the PST-S may represent the time (as reflected by the CPDU-S) in which the PDU set 602 is encoded. The core network 508 and base station 506 may use these three timestamps to accurately determine a delivery time in which the PDU set 602 is to be sent to the UE 502.

In some embodiments, the clock manager 520 may be configured to set, determine, configure, or otherwise establish a delivery time window (DTW). The DTW may be or include a time in which the PDU set 602 is to be delivered to the UE 502. The clock manager 520 may be configured to establish the DTW, particularly for multi-modal real-time communication sessions, for proper synchronization with other related medias. For example, the clock manager 520 may be configured to establish the DTW, for the base station 506 to deliver PDU sets 602 of multiple streams (such as both audio and video PDU sets sent via separate data pipes or streams). In some embodiments, the clock manager 520 may be configured to negotiate or otherwise establish the DTW with the core network 508. In some embodiments, the clock manager 520 may be configured to establish the DTW based on or according to an application level policy. For example, certain applications or application types may have predetermined DTWs. The clock manager 520 may be configured to determine the DTW based on or according to the particular application which corresponds to the communication session between the application server 504 and UE 502.

The clock manager 520 may be configured to include or otherwise incorporate data / information corresponding to the DTW into the PDU set 602. For example, the clock manager 520 may set an absolute delivery time which the clock manager 520 may determine according to the DTW. Continuing this example, the clock manager 520 may be configured to determine the absolute delivery time by adding a time offset corresponding to the DTW, to the reference time (or one or more of the timestamps included in the PDU set 602). As another example, the clock manager 520 may be configured to include the DTW into the PDU set 602 together with the timestamp(s), and the base station 506 may be configured to determine the absolute delivery time by applying the DTW to the timestamp. The clock manager 520 may thus be configured to indicate or otherwise identify the DTW to the AF 524.

As illustrated in FIG. 6, a PDU set 602 encoded by the application server 504 may be sent via the core network 508 (e.g., via the AF 524 of the core network 508) to the base station 506 at a first time instance (t1) (e.g., as indicated by the PDU set timestamp). Due to transit delays and jitter, the PDU set 602 may arrive at the base station 506 at a second time instance (t2) subsequent to the first time instance. The base station 506 may be configured to determine the arrival time at the base station 506 and the DTW (e.g., based on the information included in the PDU set 602). The base station 506 may be configured to determine a time budget, based on a difference between the delivery time (e.g., absolute delivery time) and the arrival time. For example, the base station 506 may be configured to determine the time budget as a sum of the PDU set timestamp (e.g., 11) and the DTW, less the arrival time (e.g., t2), with respect to the reference time. Because the PDU set clock may not have the same starting point as the BS clock of the base station 506, the base station 506 may be configured to determine the offset between the clocks (e.g., by subtracting the PDU set timestamp and the NTP-S).

In various instances, the base station 506 may have various internal routing or processing of the PDU sets 602, prior to delivering the PDU sets 602 to the UE 502, which may contribute to delay in delivery. For example, as illustrated in FIG. 6, while the PDU set 602 may arrive at the second time instance, due to the internal routing and processing of the PDU sets 602, the base station 506 may not be configured to transmit the PDU sets 602 to the UE 502 until a third time instance (t3) subsequent to the second time instance. The base station 506 may be configured to apply a delivery policy for delivering the PDU set, based on a difference between the third time instance and the DTW (e.g., the time budget). For example, the base station 506 may be configured to selectively discard PDU sets 602, in instances where the base station 506 cannot deliver the PDU sets 602 within the time budget. As another example, the base station 506 may be configured to prioritize sending PDU sets 602 with a shorter time budget than other PDU sets 602 having a greater time budget.

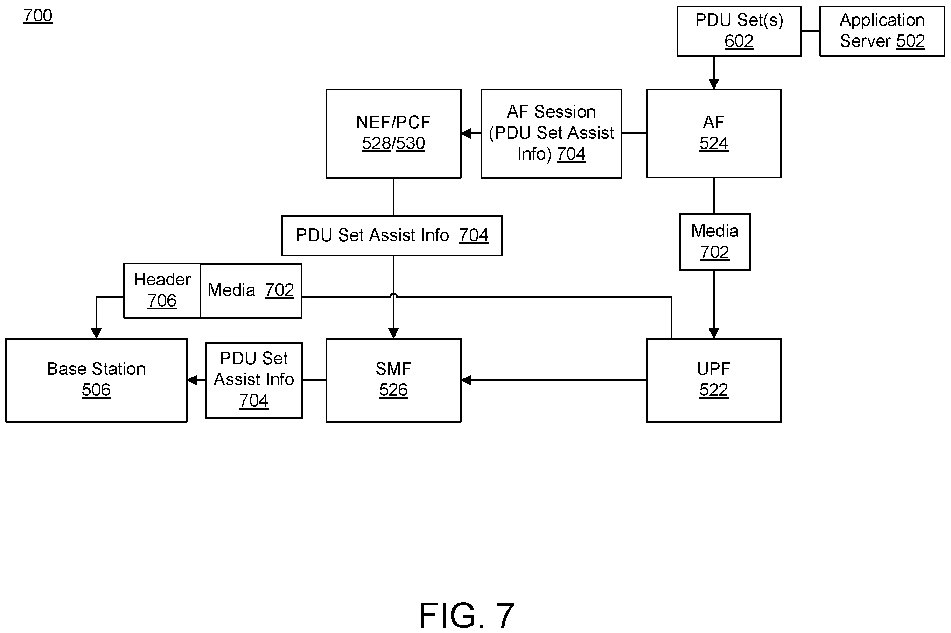

Referring now to FIG. 7, depicted is a signal flow diagram 700 showing signaling by the core network 508, according to an example implementation of the present disclosure. As shown in FIG. 7, the AF 524 may be configured to receive one or more PDU sets 602 from the application server 502. In some embodiments, the AF 524 may be configured to receive a plurality of PDU sets 602 which are to be sent to the UE 504 via separate data pipes. For example, the AF 524 may be configured to receive first PDU set(s) 602 which are to be sent via one data stream or pipe and second PDU set(s) 602 which are to be sent via another data stream or pipe. In some implementations, the first PDU set(s) 602 may include a first type of data / information, such as audio data, and the second PDU set(s) may include a second type of data / information, such as video data. The PDU sets 602 may include media 702 for transmission (e.g., via the UPF 522) to the UE 504.

The AF 524 may be configured to generate, determine, set, establish, derive, or otherwise configure PDU set assistance information 704. The PDU set assistance information 704 may include the identifier used to correlate different PDU sets 602 by the base station 506 (e.g., the PDU set source identifier) and/or the timestamps used for configuring the reference time (e.g., the NTP timestamp and corresponding PDU timestamp). The AF 524 may be configured to transmit, send, or otherwise provide the PDU set assistance information 704 to the NEF 528 and/or PCF 530. The NEF / PCF 528, 530 may be configured to transmit the PDU set assistance information to the SMF 526 (e.g., via the N7 interface) from the AF 524. The SMF 526 may be configured to transmit the PDU set assistance information (e.g., via the N2 interface) to the base station 506. The PDU set assistance information 704 may be used by the base station 506 to determine an offset between the PDU timestamp and the NTP timestamp (e.g., because the corresponding clock signals may not have the same start time), to determine the time budget in which to deliver the PDU sets 602 to the UE 504.

In parallel, the AF 524 may be configured to transmit, send, or otherwise provide the media 702 to the UPF 524. In some embodiments, the AF 524 may be configured to provide PDU set metadata with the media 702. For example, the PDU set metadata may include the PDU set source identifier, the PDU set timestamp (e.g., the timestamp in which the PDU set 602 is encoded by the AF 524 and/or application server 502, or the PST-S described above), and the DTW. The UPF 524 may be configured to generate a header for the media 702. The header may be, for example, a general packet radio service (GRPS) tunneling protocol user plane (GTP-U) header for the media 702. The header 706 may include the PDU set metadata provided by the AF 524 (e.g., the PDU set source identifier and PST-S). The UPF 524 may be configured to transmit the header 706 and media 702 to the base station 506 serving the UE 504. In some embodiments, the UPF 524 may be configured to transmit the header 706 and media 702 via the N3 interface to the base station 506.

The base station 506 may be configured to receive the header 706 and media 702 from the UPF 522, and the PDU set assistance information 705 from the SMF 526. The base station 506 may be configured to determine a time budget for delivering the PDU set 602 (e.g., the media 702), based on or according to the PDU set metadata from the header 706 and the PDU set assistance information 704. For example, the base station 506 may be configured to determine the offset between the PDU set clock and the network time protocol clock (NTP clock) based on the difference between the NTP-S and CPDU-S. The base station 506 may be configured to determine the time budget, by applying the offset to the PDU set timestamp (e.g., to determine a corresponding time with reference to the NTP clock), and adding the delivery time window.

The base station 506 may be configured to apply a delivery policy to the PDU set 602, to deliver the PDU set 602 to the UE 504. In some embodiments, the delivery policy may be set locally at the base station 506 (e.g., by operations and maintenance (O&M)). In some embodiments, the delivery policy may be set / indicated / signaled / identified by the AF 524. For example, the PDU sets 602 may include an indication of the delivery policy therein, which may be encoded by the AF 524 and/or application server 502. The indication may include, for example, a discard all policy (e.g., "Late-Discard All" indication). The base station 506 may be configured to apply the delivery policy (e.g., as set locally and/or indicated by the AF 524) to schedule delivery of PDU sets 602, selectively discard PDU sets 602, and/or discard grouped / correlated PDU sets 602.

In some embodiments, the delivery policy may be applied by the base station 506 on a per-PDU set 602 basis. For example, where the discard all policy indicates whether to discard each PDU set 602 of a common data flow (e.g., as indicated by the correlation identifier) where one of the PDU sets 602 cannot be delivered within the time budget, the base station 506 may be configured to apply the discard all policy to the PDU sets 602 based on the time budget. Continuing this example, where the base station 506 receives a first PDU set 602 including audio data (which can be sent within the time budget) and a second PDU set 602 including video data (which cannot be sent within the time budget), where the first PDU set 602 and second PDU set 602 share the same correlation identifier and where the discard all policy indicates to the base station 506 to discard all PDU sets 602, the base station 506 may be configured to forego transmission of the first and second PDU sets 602 to the UE 504. On the other hand, where the base station 506 receives a first PDU set 602 including audio data (which can be sent within the time budget) and a second PDU set 602 including video data (which cannot be sent within the time budget), where the first PDU set 602 and second PDU set 602 share the same correlation identifier and where the discard all policy indicates to the base station 506 not to discard all PDU sets 602, the base station 506 may be configured to transmit the first PDU set 602 but discard the second PDU set 602 (e.g., by foregoing transmission of the second PDU set).

In some embodiments, the delivery policy may be applied by the base station 506 to schedule delivery of PDU sets 602. For example, the base station 506 may be configured to receive multiple PDU sets 602 of different communication sessions, for transmission to one or more UEs 504. The PDU sets 602 may have different time budgets. In this example, the base station 506 may be configured to schedule delivery of PDU sets 602 to a respective UE 504, according to the time budgets. For example, rather than a first-in-first-out scheme, the base station 506 may be configured to deliver PDU sets 602 according to which PDU sets 602 have the shortest time budget. In this regard, assuming the base station 506 receives a first PDU set 602 at a first time instance and a second PDU set 602 at a second time instance, if the second PDU set 602 has a shorter time budget than the first PDU set 602, the base station 506 may be configured to transmit the second PDU set 602 prior to the first PDU set 602 (e.g., even though the first PDU set 602 was received prior to the second PDU set 602).

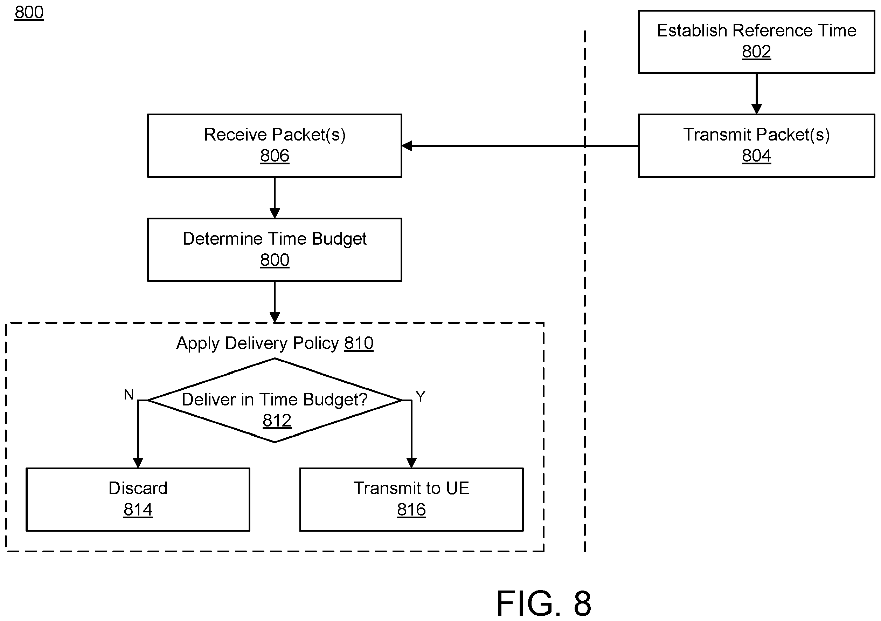

Referring now to FIG. 8, depicted is a flowchart showing an example method 800 for power savings according to RAN awareness, according to an example implementation of the present disclosure. The method 800 may be performed by the devices, elements, or hardwaredescribed above with reference to FIG. 1 - FIG. 7. In some embodiments, some steps of the method 800 may be performed by the application server 502, some steps may be performed by the core network 508, and/or some steps may be performed by the base station 506. As a brief overview, at step 802, an application server may establish a reference time with a wireless communication node. At step 804, the application server may transmit one or more packets. At step 806, the wireless communication node may receive the one or more packets. At step 808, the wireless communication node may determine a time budget. At step 810, the wireless communication node may apply a delivery policy. Applying the delivery policy may include the wireless communication node determining if the packet(s) can be delivered within the time budget (e.g., determined at step 808), and either discarding the packet(s) (at step 814) or transmitting the packet(s) to the UE (at step 816).

At step 802, an application server may establish a reference time with a wireless communication node. In some embodiments, the application server may establish a reference time between one or more first clocks of the application server and one or more second clocks of the wireless communication node. For example, the application server may establish a reference time as an offset/difference between the first clock(s) and the second clock(s). In some embodiments, the application server may establish the reference time by signaling, transmitting, or otherwise indicating a timestamp or time corresponding to a PDU set clock (e.g., used to generate and/or encode a PDU set at the application server) to an application function (AF) of the core network. Thus, the timestamp may be a PDU timestamp. The AF may be configured to generate, based on the PDU timestamp and the one or more second clocks (e.g., a network time protocol (NTP)), a NTP timestamp (NTP-S) and a corresponding PDU timestamp (CPDU-S). The AF may be configured to provide the NTP-S and CPDU-S to the wireless communication node, to establish the reference time. The wireless communication node may establish the reference time based on a difference between the NTP-S and CPDU-S (e.g., indicating an offset between start times of then respective clocks). In various embodiments, the application server and/or the AF may be configured to update the NTP-S and CPDU-S periodically, to accommodate for drift.

At step 804, the application server may transmit one or more packets. In some embodiments, the application server may transmit the one or more packets to the wireless communication node for providing to a UE. The application server may generate the packets for transmission to the UE via the wireless communication node. The application server may generate the packet(s) as part of an application / resource / service executing or hosted at the application server. The packet(s) may include information / data relating to a real-time communication session. In some embodiments, the packet(s) may include protocol data unit(s) (PDUs) or PDU sets. In some embodiments, the packet(s) may include multi-modal packets including a first set of packet(s) carrying a first type of information or data (e.g., audio data) and a second set of packet(s) carrying a second type of information or data (e.g., video data).

In some embodiments, responsive to generating the packet(s), the application server may encode the packets. As part of encoding the packet(s), the application server may include or incorporate a timestamp into the packets. The timestamp may identify or indicate a time in which the packet(s) are encoded. The timestamp may be or include a PDU set timestamp (or PST-S). The timestamp may be with reference to the PDU set clock. In some embodiments, the application server may set a delivery status for the packet(s) generated by the application server. For example, the delivery status may be or include a late discard all indication. The application server may set or configure the delivery status based on the application or resource hosted on the application server, based on an application type of the application, etc. The delivery status may indicate, identify, or otherwise correspond to a delivery policy to be applied by the wireless communication node for selectively delivering the packet(s) to the UE as described in greater detail below. The application server may set the delivery status for the packet(s) in a header of the packet(s), in metadata of the packet(s), etc. In some embodiments, the application server may set or otherwise configure a delivery time window (DTW) for the packet(s). The DTW may be or include a time (e.g., an absolute delivery time) by which the wireless communication node is to deliver the packet(s) to the UE. Similar to the delivery status, the application server may set the DTW according to the application / resource / application type. Additionally, the application server may set the DTW in the header of the packet(s), in metadata of the packet(s), etc.

Responsive to generating and encoding the packets, the application server may communicate, send, push, or otherwise transmit the encoded packets to the core network. Specifically, the application server may transmit the encoded packets to the AF of the core network. The AF may receive the encoded packets from the application server. Where the packet(s) include multi-modal packet(s) carrying different types of information / data relating to the same communication session, the AF may include or incorporate a common identifier into the packets, which link the packets together. The common identifier may include a correlation identifier. The AF may include / incorporate the common identifier into the packets, such that the wireless communication node can apply the delivery policy to each of the linked packets as indicated by the delivery status.

In some embodiments, the AF may generate PDU set metadata and PDU set assistance information for the packet(s) received from the application server. The AF may generate the PDU set metadata and PDU set assistance information based on the information included in the packet(s) and the reference time. For example, the AF may generate PDU set metadata to include the identifier for the packet(s) (e.g., an individual packet identifier for the packet(s) as well as the common identifier), the timestamp indicating when the packet(s) were encoded (e.g., the PST-S) and the DTW. The AF may thus generate the PDU set metadata according to the information included in the packet(s). The AF may generate the PDU set assistance information to include the identifier for the packet(s), the timestamp corresponding to the NTP clock (e.g., the NTP-S) and the corresponding PDU timestamp (e.g., the CPDU-S).

The AF may transmit the PDU set assistance information to a network exposure function (NEF), and/or policy control function (PCF) of the core network. The NEF/PCF may forward the PDU set assistance information from the AF to a session management function (SMF) of the core network (e.g., via the N7 interface). The SMF may forward the PDU set assistance information from the NEF/PCF to the wireless communication node (e.g., via the N2 interface). Thus, the wireless communication node may receive the PDU set assistance information from the AF (e.g., via the NEF/PCF and SMF). The AF may transmit contents of the packet(s) (e.g., media, such as audio or video) to a user plane function (UPF) of the core network. The AF may incorporate into the content(s), the PDU set metadata (e.g., the identifier(s), PDU set timestamp, and delivery time window). The UPF may generate a header for the content(s) of the packet. The header may be or include a general packet radio service (GRPS) tunneling protocol user plane (GTP-U) header. The header may include the PDU set metadata from the AF. The UPF may transmit the header and contents to the wireless communication node (e.g., via the N3 interface).

At step 806, the wireless communication node may receive the one or more packets. In some embodiments, the wireless communication node may receive the one or more packets from the application server. The wireless communication node may receive the one or more packets via the AF and UPF of the core network, as described above. The wireless communication node may receive the packet(s) including information usable by the wireless communication node for applying a delivery policy for delivering the packet(s) to the UE according to the reference time established at step 802. The information may include the PDU set metadata described above. In other words, the information may include a timestamp generated by the application server (e.g., according to the PDU clock, or the PST-S). The timestamp may indicate a time in which the packet(s) were encoded at the application server.

At step 808, the wireless communication node may determine a time budget. In some embodiments, the wireless communication node may determine the time budget based on or according to the reference time and the information of the packet(s). For example, the wireless communication node may determine the time budget based on the PST-S, an arrival time of the packet(s) from the application server (e.g., via the core network), the reference time, and the DTW. The wireless communication node may determine the time budget by computing a difference between the NTP-S and the CPDU-S (e.g., indicating the difference in offset times). The wireless communication node may determine the time budget by applying the difference to the PST-S. In this regard, by applying the difference to the PST-S, the wireless communication node may map the PST-S to the NTP. The wireless communication node may determine the time budget by adding the DTW to the mapped value (e.g., the PST-S after applying the difference to map to the NTP), reduced by the arrival time. In other words, the wireless communication node may determine the time budget as being equal to a sum of the DTW, the difference between NTP-S and CPDU-S, and the DTW, reduced by the arrival time.

At step 810, the wireless communication node may apply a delivery policy. In some embodiments, the wireless communication node may apply the delivery policy to selectively deliver the packet(s) to the UE (e.g., wireless communication device), according to the reference time. The wireless communication node may apply the delivery policy, to schedule delivery of the packet(s) and/or selectively discard the packet(s). The wireless communication node may apply the delivery policy to deliver the packet(s) to the UE according to the time budget determined at step 808.

In some embodiments, the wireless communication node may determine the delivery policy. Where the packet(s) include information indicating or identifying the delivery policy (e.g., the delivery status), the packet(s) may apply the delivery policy according to the information included in the packet(s). In some embodiments, the wireless communication node may determine the delivery policy according to one or more local settings or configuration information. For example, the delivery policy may be set or configured locally (e.g., via operations and maintenance configuration). The wireless communication node may determine the delivery policy for applying to a plurality of related / corresponding / correlated packets (e.g., based on the correlation identifier). For example, the delivery status may indicate whether the wireless communication node is to discard each of the one or more first packets and the one or more second packets, responsive to determining that at least one of the one or more first packets or the one or more second packets cannot be provided to the UE within a time budget. The wireless communication node may apply the delivery policy, to determine whether / how to deliver the packet(s) to the UE.

Applying the delivery policy may include the wireless communication node determining if the packet(s) can be delivered within the time budget (e.g., step 812). In some embodiments, the wireless communication node may determine if the packet(s) can be delivered within the time budget, by determining a difference between the time budget and the arrival time. For example, the wireless communication node may determine if the difference is less than a threshold difference (e.g., where the threshold is set / determined / configured based on an average amount of time, from the arrival time, used by the wireless communication node for internal processing and routing of the packets until delivery).

Where the delivery policy indicates to discard packet(s) which cannot be delivered within the time budget, and where the difference is less than the threshold difference, at step 814, the wireless communication node may discard the packet(s). In some embodiments, where the delivery status of the packet(s) indicates to discard each of the related / linked / correlated packet(s) relating to a common communication session, and where at step 812, the wireless communication node determines that at least one of the packet(s) cannot be delivered within the time budget, the wireless communication node may discard the at least one packet(s) and the related packet(s).

Where, at step 812, the wireless communication node determines that the packet(s) can be delivered within the time budget, at step 816, the wireless communication node may transmit, send, or otherwise provide the packet(s) to the UE. In some embodiments, the wireless communication node may schedule delivery of multiple set(s) of packet(s) according to the time budget for the respective packet(s). For example, where one or more first packet(s) have a time budget which is less than one or more second packet(s), the wireless communication node may schedule delivery of the one or more first packet(s) to be ahead of delivery of the one or more second packet(s).

Having now described some illustrative implementations, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements and features discussed in connection with one implementation are not intended to be excluded from a similar role in other implementations or implementations.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device, etc.) may include one or more devices (e.g., RAM, ROM, Flash memory, hard disk storage, etc.) for storing data and/or computer code for completing or facilitating the various processes, layers and modules described in the present disclosure. The memory may be or include volatile memory or nonvolatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit and/or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the aspects and implementations disclosed herein.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Systems and methods described herein may be embodied in other specific forms without departing from the characteristics thereof. References to "approximately," "about" "substantially" or other terms of degree include variations of +/-10% from the given measurement, unit, or range unless explicitly indicated otherwise. Coupled elements can be electrically, mechanically, or physically coupled with one another directly or with intervening elements. Scope of the systems and methods described herein is thus indicated by the appended claims, rather than the foregoing description.

The term "coupled" and variations thereof includes the joining of two members directly or indirectly to one another. Such joining may be stationary (e.g., permanent or fixed) or moveable (e.g., removable or releasable). Such joining may be achieved with the two members coupled directly with or to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References to "or" can be construed as inclusive so that any terms described using "or" can indicate any of a single, more than one, and all of the described terms. A reference to "at least one of 'A' and 'B'" can include only 'A', only 'B', as well as both 'A' and 'B'. Such references used in conjunction with "comprising" or other open terminology can include additional items.

Modifications of described elements and acts such as variations in sizes, dimensions, structures, shapes and proportions of the various elements, values of parameters, mounting arrangements, use of materials, colors, orientations can occur without materially departing from the teachings and advantages of the subject matter disclosed herein. For example, elements shown as integrally formed can be constructed of multiple parts or elements, the position of elements can be reversed or otherwise varied, and the nature or number of discrete elements or positions can be altered or varied. Other substitutions, modifications, changes and omissions can also be made in the design, operating conditions and arrangement of the disclosed elements and operations without departing from the scope of the appended claims.

References herein to the positions of elements (e.g., "top," "bottom," "above," "below") are merely used to describe the orientation of various elements in the FIGURES. The orientation of various elements may differ according to other exemplary embodiments, and that such variations are intended to be encompassed by the present disclosure.

## Claims

1. A method, comprising:
establishing, by an application server with a wireless communication node, a reference time between one or more first clocks of the application server and one or more second clocks of the wireless communication node; and
transmitting, by the application server, one or more packets to the wireless communication node for providing to a user equipment (UE), the one or more packets including information usable by the wireless communication node for applying a delivery policy for delivering the one or more packets to the UE, according to the reference time.

2. The method of claim 1, wherein the one or more packets comprise one or more first packets, the method further comprising:
transmitting, by the application server, one or more second packets to the wireless communication node, the one or more first packets transmitted via a first data pipe and the one or more second packets transmitted via a second data pipe.

3. The method of claim 1, wherein the one or more packets comprise one or more first packets, the one or more first packets including a common identifier with one or more second packets, which link the one or more first packets to the one or more second packets.

4. The method of claim 3, wherein the wireless communication node applies the delivery policy to each of the one or more first packets and the one or more second packets, according to the common identifier.

5. The method of claim 3, further comprising setting, by the application server, a delivery status for the one or more first packets and the one or more second packets,
wherein the wireless communication node applies the delivery policy according to the delivery status; and optionally,
wherein the delivery status indicates whether the wireless communication node is to discard each of the one or more first packets and the one or more second packets, responsive to determining that at least one of the one or more first packets or the one or more second packets cannot be provided to the UE within a time window.

6. The method of any one of the preceding claims, wherein the delivery policy comprises a discard policy corresponding to a delivery time window in which the one or more packets are to be delivered to the UE.

7. The method of any one of the preceding claims, wherein the information includes a first timestamp indicating a first time, the first timestamp generated according to the one or more first clocks; and optionally,
wherein the wireless communication node determines a time budget in which to deliver the one or more packets to the UE, the time budget determined according to 1) the first timestamp, 2) an arrival time of the one or more packets from the application server determined based on the one or more second clocks, 3) the reference time, and 4) a delivery time window corresponding to the delivery policy.

8. The method of claim 1, wherein the information includes a delivery time window which corresponds to the delivery policy; and/or
wherein the wireless communication node applies the delivery policy, to at least one of schedule delivery of the one or more packets, or discard the one or more packets.

9. A wireless communication node, comprising:
a wireless transceiver; and
one or more processors configured to:
determine a reference time between one or more first clocks of an application server and one or more second clocks of the wireless communication node; and
receive, via the wireless transceiver from the application server, one or more packets for providing to a user equipment (UE), the one or more packets including information usable by the wireless communication node for applying a delivery policy; and
apply the delivery policy to the one or more packets, for selectively delivering, via the wireless transceiver, the one or more packets to the UE, according to the reference time.

10. The wireless communication node of claim 9, wherein the one or more packets comprise one or more first packets, the one or more first packets including a common identifier with one or more second packets, which link the one or more packets to the one or more second packets.

11. The wireless communication node of claim 10, wherein the one or more processors apply the delivery policy to each of the one or more first packets and the one or more second packets, according to the common identifier.

12. The wireless communication node of claim 10, wherein the one or more processors are further configured to determine, according to the information of the one or more first packets and the one or more second packets, a delivery status for the one or more first packets and the one or more second packets,
wherein the one or more processors apply the delivery policy according to the delivery status; and optionally,
wherein the delivery status indicates whether the wireless communication node is to discard each of the one or more first packets and the one or more second packets, responsive to determining that at least one of the one or more first packets or the one or more second packets cannot be provided to the UE within a time budget.

13. The wireless communication node of any of claims 9 to 12, wherein the information includes a first timestamp indicating a first time, the first timestamp generated according to the one or more first clocks; and optionally,
wherein the one or more processors are configured to determine a time budget in which to deliver the one or more packets to the UE, the time budget determined according to 1) the first timestamp, 2) an arrival time of the one or more packets from the application server determined based on the one or more second clocks, 3) the reference time, and 4) a delivery time window corresponding to the delivery policy.

14. The wireless communication node of any of claims 9 to 13, wherein the one or more processors are configured to apply the delivery policy, to at least one of schedule delivery of the one or more packets, or discard the one or more packets.

15. An application server, comprising:
a wireless transceiver; and
one or more processors configured to:
establish, with a wireless communication node, a reference time between one or more first clocks of the application server and one or more second clocks of the wireless communication node; and
transmit, via the wireless transceiver, one or more packets to the wireless communication node for providing to a user equipment (UE), the one or more packets including information usable by the wireless communication node for applying a delivery policy for delivering the one or more packets to the UE, according to the reference time.
